(19) Europäisches Patentamt
European Patent Office
Office européen des brevets

(11) **EP 4 155 670 A1**

(12) **EUROPEAN PATENT APPLICATION**

(43) Date of publication:
**29.03.2023  Bulletin 2023/13**

(21) Application number: **22172486.7**

(22) Date of filing: **10.05.2022**

(51) International Patent Classification (IPC):
**G01C 21/00** $^{(2006.01)}$    **G06T 17/05** $^{(2011.01)}$
**G09B 29/10** $^{(2006.01)}$

(52) Cooperative Patent Classification (CPC):
**G01C 21/3822; G01C 21/3811; G01C 21/3867; G06T 17/05**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **28.09.2021   CN 202111141170**

(71) Applicant: **BEIJING BAIDU NETCOM SCIENCE
AND
TECHNOLOGY CO. LTD.
100085 Beijing (CN)**

(72) Inventors:
 • **ZHANG, Junjun
   Beijing, 100085 (CN)**
 • **ZENG, Yi
   Beijing, 100085 (CN)**
 • **MA, Wei
   Beijing, 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **INTERSECTION VERTEX HEIGHT VALUE ACQUISITION METHOD AND APPARATUS, ELECTRONIC DEVICE AND STORAGE MEDIUM**

(57)    The present disclosure provides an intersection vertex height value acquisition method and apparatus, an electronic device and a storage medium, and relates to the field of artificial intelligence such as intelligent transportation. The method may include: determining roads with starting points or ending points located in a to-be-processed intersection; and performing, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road. A degree of fit between the intersection and a road surface can be improved by use of the solutions according to the present disclosure.

```
┌─────────────────────────────────────────────┐
│ Determine roads with starting points or      │    101
│ ending points located in a to-be-processed    │
│ intersection                                  │
└─────────────────────────────────────────────┘
                      │
                      ▼
┌─────────────────────────────────────────────┐
│ Perform, for any vertex in a polygonal        │
│ intersection region corresponding to the      │
│ intersection, the following processing:       │    102
│ determining a road corresponding to the       │
│ vertex, taking the determined road as a       │
│ matching road of the vertex, and              │
│ determining a height value of the vertex      │
│ according to height values of endpoints on a  │
│ road center line of the matching road         │
└─────────────────────────────────────────────┘
```

FIG.1

EP 4 155 670 A1

## Description

### Field of the Disclosure

The present disclosure relates to the field of artificial intelligence technologies, and in particular, to an intersection vertex height value acquisition method and apparatus, an electronic device and a storage medium in the field such as intelligent transportation.

### Background of the Disclosure

In a scenario of making a three-dimensional high-precision map, intersection elements and road surface elements are modeled and composed separately. For any intersection, an intersection region corresponding thereto is generally a polygon.

At present, height values of vertices on the polygon are generally set to a same value. In this way, in the case of large elevation changes at the intersection, it often leads to insufficient fit between the intersection and a road surface, such as the existence of gaps, which affects the quality of the made high-precision map.

### Summary of the Disclosure

The present disclosure provides an intersection vertex height value acquisition method and apparatus, an electronic device and a storage medium.

An intersection vertex height value acquisition method, including:

determining roads with starting points or ending points located in a to-be-processed intersection; and

performing, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road.

An intersection vertex height value acquisition apparatus, including: a first processing module and a second processing module;

the first processing module being configured to determine roads with starting points or ending points located in a to-be-processed intersection; and

the second processing module being configured to perform, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road.

An electronic device, including:

at least one processor; and

a memory in communication connection with the at least one processor; wherein

the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, including computer programs/instructions, wherein, when the computer programs/instructions are executed by a processor, the method as described above is performed.

One embodiment in the above disclosure has the following advantages or beneficial effects. For the to-be-processed intersection, height values of vertices in a polygon of the intersection may be determined respectively in conjunction with height values of endpoints on road center lines of roads with starting points or ending points located in the intersection, so as to improve a degree of fit of the intersection and a road surface.

It should be understood that the content described in this part is neither intended to identify key or significant features of the embodiments of the present disclosure, nor intended to limit the scope of the present disclosure. Other features of the present disclosure will be made easier to understand through the following description.

**Brief Description of Drawings**

The accompanying drawings are intended to provide a better understanding of the solutions and do not constitute a limitation on the present disclosure. In the drawings,

FIG. 1 is a flowchart of an embodiment of an intersection vertex height value acquisition method according to the present disclosure;
FIG. 2 is a schematic diagram of an intersection region corresponding to a to-be-processed intersection according to the present disclosure;
FIG. 3 is a schematic diagram of road center lines of roads with starting points or ending points located in the to-be-processed intersection according to the present disclosure;
FIG. 4 is a schematic diagram of core regions corresponding to roads corresponding to two of the four road center lines shown in FIG. 3;
FIG. 5 is a schematic diagram of a composition structure of an intersection vertex height value acquisition apparatus 500 according to the present disclosure; and
FIG. 6 is a schematic block diagram of an electronic device 600 configured to implement embodiments of the present disclosure.

**Detailed Description of Preferred Embodiments**

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it is to be understood that the term "and/or" herein is merely an association relationship describing associated objects, indicating that three relationships may exist. For example, A and/or B indicates that there are three cases of A alone, A and B together, and B alone. Besides, the character "/" herein generally means that associated objects before and after it are in an "or" relationship.

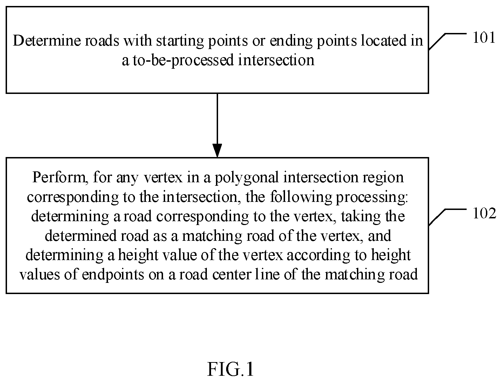

FIG. 1 is a flowchart of an embodiment of an intersection vertex height value acquisition method according to the present disclosure. As shown in FIG. 1, the following specific implementations are included.

In step 101, roads with starting points or ending points located in a to-be-processed intersection are determined.

In step 102, for any vertex in a polygonal intersection region corresponding to the intersection, the following processing is performed: determining a road corresponding to the vertex, taking the determined road as a matching road of the vertex, and determining a height value of the vertex according to height values of endpoints on a road center line of the matching road.

As can be seen, in the solution in the method embodiment, for the to-be-processed intersection, height values of vertices in a polygon of the intersection may be determined respectively in conjunction with height values of endpoints on road center lines of roads with starting points or ending points located in the intersection, so as to improve a degree of fit of the intersection and a road surface, and correspondingly improve the quality of the made high-precision map.

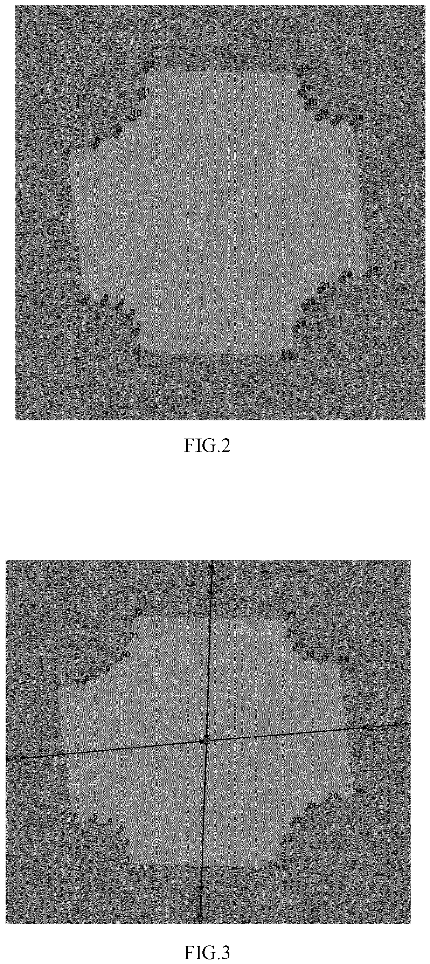

FIG. 2 is a schematic diagram of an intersection region corresponding to a to-be-processed intersection according to the present disclosure. As shown in FIG. 2, the intersection region is a polygonal region, which may include a total of 24 vertices from 1 to 24 as shown in the figure.

How to set a number and positions of vertices of a polygon is not limited. For example, an existing setting manner in the high-precision map making process may be adopted.

How to determine the roads with starting points or ending points located in the to-be-processed intersection is not limited either. A specific number of the roads depend on an actual situation, which may be, for example, three, four or the like.

FIG. 3 is a schematic diagram of road center lines of roads with starting points or ending points located in the to-be-processed intersection according to the present disclosure. As shown in FIG. 3, it is assumed that four roads with starting points or ending points located in the to-be-processed intersection are included. The ending points of two roads are located in the to-be-processed intersection, the starting points of two roads are located in the to-be-processed intersection, and a small circle on the center line of each road represents an endpoint.

How to set a number and positions of endpoints on each road center line is not limited. For example, an existing setting manner in the high-precision map making process may be adopted.

Preferably, for each road, a core region corresponding thereto may be determined. The core region is located in a polygonal intersection region corresponding to the to-be-processed intersection.

Preferably, for any road, the core region corresponding to the road may be determined according to a width at a junction of the road and the intersection region.

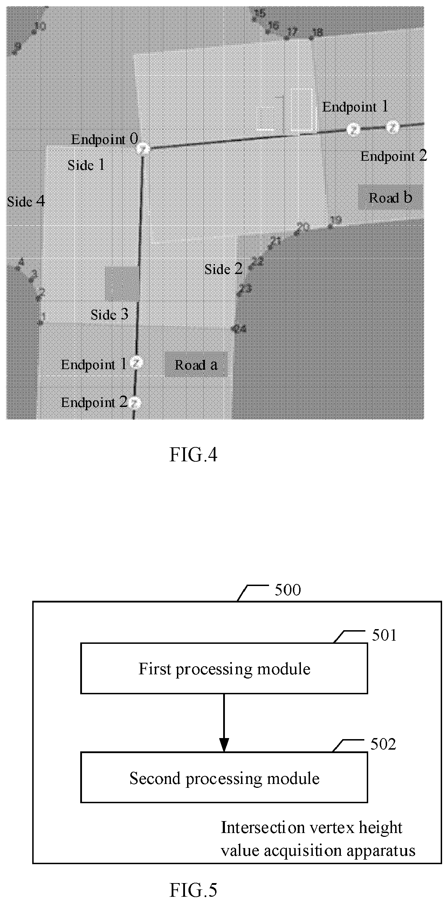

FIG. 4 is a schematic diagram of core regions corresponding to roads corresponding to two of the four road center lines shown in FIG. 3. As shown in FIG. 4, for ease of expression, the two roads are called Road a and Road b respectively, and each core region may be a rectangular region. Taking Road a as an example, for ease of expression, four sides of the core region corresponding thereto are called Side 1, Side 2, Side 3 and Side 4 respectively, and the endpoints on the road center line of Road a are numbered as Endpoint 0, Endpoint 1, Endpoint 2 ... Then, as can be seen, lengths of Side 1 and Side 3 are both equal to a width at a junction (i.e., Side 3) of Road a and the intersection region, and Endpoint 0 is located on Side 1. That is, Side 1 is a straight line parallel to Side 3 and passing through Endpoint 0.

In the above manner, the core region corresponding to each road can be determined simply and efficiently, thereby laying a good foundation for subsequent processing.

For any vertex in a polygon corresponding to a road region, the following processing may be performed: determining a road corresponding to the vertex, taking the determined road as a matching road of the vertex, and determining a height value of the vertex according to height values of endpoints on a road center line of the matching road.

Preferably, for any vertex, if it is determined that the vertex is located in any core region, the road corresponding to the core region may be taken as the matching road of the vertex, and otherwise, a road corresponding to a road center line of a perpendicular foot corresponding to the vertex may be taken as the matching road of the vertex.

For any vertex, one or more (N) matching roads may be provided, where N is a positive integer greater than one, generally 2. According to different numbers of matching roads, the manner of determining the height value of the vertex may also vary, as introduced below respectively.

1) One matching road is provided.

Preferably, for any vertex, two endpoints corresponding to the vertex may be selected from the endpoints on the road center line of the matching road, and the height value of the vertex may be determined according to a distance between the two selected endpoints and height values of the two selected endpoints.

Preferably, a perpendicular foot of the vertex on the road center line of the matching road may be acquired, and endpoints on two sides of the perpendicular foot are taken as two endpoints corresponding to the vertex.

Preferably, when the height value of the vertex is determined according to the distance between the two selected endpoints and the height values of the two selected endpoints, inverse distance interpolation calculation may be performed according to the distance between the two selected endpoints and the height values of the two selected endpoints, and a calculation result is taken as the height value of the vertex.

Taking Vertex 24 shown in FIG. 4 as an example, the matching road thereof is Road a. Firstly, a perpendicular foot of Vertex 24 and the road center line of Road a may be acquired. That is, a perpendicular line is drawn to the road center line of Road a through Vertex 24, and the intersection point is the perpendicular foot. Then, endpoints on two sides of the perpendicular foot, namely Endpoint 0 and Endpoint 1, may be taken as two endpoints corresponding to Vertex 24. Further, a distance between Vertex 24 and Endpoint 0 and a distance between Vertex 24 and Endpoint 1 may be acquired respectively. In addition, height values of the endpoints on each road center line may be acquired respectively in an existing manner. Correspondingly, inverse distance interpolation calculation may be performed according to the acquired two distances and the height values of Endpoint 0 and Endpoint 1, and a calculation result may be taken as the height value of Vertex 24.

That is,

$$H = H1 * (D2/(D2+D1)) + H2 * (D1/(D2+D1)); \qquad (1)$$

where HI denotes the height value of Endpoint 0, H2 denotes the height value of Endpoint 1, D1 denotes the distance between Vertex 24 and Endpoint 0, D2 denotes the distance between Vertex 24 and Endpoint 1, and H denotes the height value of Vertex 24.

Taking Vertex 19 shown in FIG. 4 as an example, the matching road thereof is Road b. Firstly, a perpendicular foot of Vertex 19 and the road center line of Road b may be acquired. Then, endpoints on two sides of the perpendicular foot, namely Endpoint 0 and Endpoint 1, may be taken as two endpoints corresponding to Vertex 19. Further, a distance between Vertex 19 and Endpoint 0 and a distance between Vertex 19 and Endpoint 1 may be acquired respectively, inverse distance interpolation calculation may be performed according to the acquired two distances and the height values of Endpoint 0 and Endpoint 1, and a calculation result may be taken as the height value of Vertex 19.

2) N matching roads are provided, N being a positive integer greater than one.

Preferably, for any vertex, for each of the N matching roads, the following processing may be performed: selecting two endpoints corresponding to the vertex from the endpoints on the road center line of the matching road, and determining the height value of the vertex according to a distance between the two selected endpoints and height values of the two selected endpoints, and acquiring a vertical distance from the vertex to the road center line of the matching road; and further determining a final height value of the vertex according to the acquired N height values and N vertical distances of the vertex.

Preferably, for any matching road, a perpendicular foot of the vertex on the road center line of the matching road may be acquired, and endpoints on two sides of the perpendicular foot are taken as two endpoints corresponding to the vertex.

Preferably, when the height value of the vertex is determined according to the distance between the two selected endpoints and the height values of the two selected endpoints, inverse distance interpolation calculation may be performed according to the distance between the two selected endpoints and the height values of the two selected endpoints, and a calculation result is taken as the height value of the vertex.

Preferably, inverse distance interpolation calculation may be further performed according to the acquired N height values and N vertical distances, and a calculation result is taken as the final height value of the vertex.

Taking Vertex 23 shown in FIG. 4 as an example, the matching roads thereof are Road a and Road b. For Road a, the following processing may be performed: acquiring a perpendicular foot of Vertex 23 and the road center line of Road a, taking endpoints on two sides of the perpendicular foot, namely Endpoint 0 and Endpoint 1, as two endpoints corresponding to Vertex 23, and acquiring a distance between Vertex 23 and Endpoint 0 and a distance between Vertex 23 and Endpoint 1 respectively; then performing inverse distance interpolation calculation according to the acquired two distances and the height values of Endpoint 0 and Endpoint 1, and taking a calculation result as the height value of Vertex 23 corresponding to Road a. In addition, a vertical distance from Vertex 23 to the road center line of Road a may be further acquired. For Road b, the following processing may be performed: acquiring a perpendicular foot of Vertex 23 and the road center line of Road b, taking endpoints on two sides of the perpendicular foot, namely Endpoint 0 and Endpoint 1, as two endpoints corresponding to Vertex 23, and acquiring a distance between Vertex 23 and Endpoint 0 and a distance between Vertex 23 and Endpoint 1 respectively; then performing inverse distance interpolation calculation according to the acquired two distances and the height values of Endpoint 0 and Endpoint 1, and taking a calculation result as the height value of Vertex 23 corresponding to Road b. In addition, a vertical distance from Vertex 23 to the road center line of Road b may be further acquired. Further, a final height value of Vertex 23 may be determined according to the acquired two height values and two vertical distances of Vertex 23 corresponding to Road a and Road b respectively.

That is,

$$H' = Ha * (Db/(Da+Db)) + Hb * (Da/(Da+Db)); \qquad (2)$$

where Ha denotes the height value of Vertex 23 corresponding to Road a, Hb denotes the height value of Vertex 23 corresponding to Road b, Da denotes the vertical distance from Vertex 23 to the road center line of Road a, Db denotes the vertical distance from Vertex 23 to the road center line of Road b, and H' denotes the final height value of Vertex 23.

As can be seen from the above introduction, for any vertex, in a case where one matching road is provided, the height value of the vertex may be determined through one inverse distance interpolation calculation. In a case where more than one matching road is provided, the height value of the vertex may be determined through multiple inverse distance interpolation calculations. The height value of the vertex can be accurately obtained in either case.

Processing may be performed in the above manner for the vertices in the polygon, so as to obtain the height values of the vertices, and height values of three-dimensional vertices of the polygon of the to-be-processed intersection are calculated. The making of the high-precision map may be continued subsequently in the existing manner. In the finally obtained high-precision map, the intersection and the road surface can well fit, thereby improving the quality of the high-precision map.

It is to be noted that, to make the description brief, the foregoing method embodiments are expressed as a series of actions. However, those skilled in the art should appreciate that the present disclosure is not limited to the described action sequence, because according to the present disclosure, some steps may be performed in other sequences or performed simultaneously. In addition, those skilled in the art should also appreciate that all the embodiments described in the specification are preferred embodiments, and the related actions and modules are not necessarily mandatory to the present disclosure.

The above is the introduction to the method embodiment. The following is a further illustration of the solution according to the present disclosure through an apparatus embodiment.

FIG. 5 is a schematic diagram of a composition structure of an intersection vertex height value acquisition apparatus 500 according to the present disclosure, including a first processing module 501 and a second processing module 502.

The first processing module 501 is configured to determine roads with starting points or ending points located in a to-be-processed intersection.

The second processing module 502 is configured to perform, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road.

Preferably, for each road, the second processing module 502 may determine a core region corresponding thereto. The core region is located in a polygonal intersection region corresponding to the to-be-processed intersection.

Preferably, for any road, the second processing module 502 may determine the core region corresponding to the road according to a width at a junction of the road and the intersection region.

Preferably, for any vertex, the second processing module 502 may, if it is determined that the vertex is located in any core region, take the road corresponding to the core region as the matching road of the vertex, and otherwise, may take a road corresponding to a road center line of a perpendicular foot corresponding to the vertex as the matching road of the vertex.

For any vertex, one or more (N) matching roads may be provided, where N is a positive integer greater than one.

Preferably, for any vertex, the second processing module 502 may, when one matching road is provided, select two endpoints corresponding to the vertex from the endpoints on the road center line of the matching road, and determine the height value of the vertex according to a distance between the two selected endpoints and height values of the two selected endpoints.

Preferably, for any vertex, the second processing module 502 may acquire a perpendicular foot of the vertex on the road center line of the matching road, and take endpoints on two sides of the perpendicular foot as two endpoints corresponding to the vertex.

Preferably, when determining the height value of the vertex according to the distance between the two selected endpoints and the height values of the two selected endpoints, the second processing module 502 may perform inverse distance interpolation calculation according to the distance between the two selected endpoints and the height values of the two selected endpoints, and take a calculation result as the height value of the vertex.

For any vertex, when N matching roads are provided, N being a positive integer greater than one, the second processing module 502 may perform the following processing for each matching road: selecting two endpoints corresponding to the vertex from the endpoints on the road center line of the matching road, and determining the height value of the vertex according to a distance between the two selected endpoints and height values of the two selected endpoints, and acquiring a vertical distance from the vertex to the road center line of the matching road; and further determining a final height value of the vertex according to the acquired N height values and N vertical distances of the vertex.

Preferably, for any matching road, the second processing module 502 may acquire a perpendicular foot of the vertex on the road center line of the matching road, and take endpoints on two sides of the perpendicular foot as two endpoints corresponding to the vertex.

Preferably, when determining the height value of the vertex according to the distance between the two selected endpoints and the height values of the two selected endpoints, the second processing module 502 may perform inverse distance interpolation calculation according to the distance between the two selected endpoints and the height values of the two selected endpoints, and take a calculation result as the height value of the vertex.

After the above processing, N height values and N vertical distances may be obtained. Preferably, the second processing module 502 may perform inverse distance interpolation calculation according to the acquired N height values and N vertical distances, and take a calculation result as the final height value of the vertex.

The specific work flow of the apparatus embodiment shown in FIG. 5 may be obtained with reference to the related description in the foregoing method embodiment, which is not described in detail.

In short, by use of the solution in the apparatus embodiment of the present disclosure, for the to-be-processed intersection, height values of vertices in a polygon of the intersection may be determined respectively in conjunction with height values of endpoints on road center lines of roads with starting points or ending points located in the intersection, so as to improve a degree of fit of the intersection and a road surface.

The solution according to the present disclosure may be applied to the field of artificial intelligence, and in particular, to the field such as intelligent transportation. Artificial intelligence is a discipline that studies how to make computers simulate certain thinking processes and intelligent behaviors (such as learning, reasoning, thinking and planning) of human beings, which includes hardware technologies and software technologies. The artificial intelligence hardware technologies generally include sensors, dedicated artificial intelligence chips, cloud computing, distributed storage, big data processing and other technologies. The artificial intelligence software technologies mainly include a computer vision technology, a speech recognition technology, a natural language processing technology, machine learning/deep learning, a big data processing technology, a knowledge graph technology and other major directions.

In addition, acquisition, storage, use, processing, transmission, provision and disclosure of users' personal information involved in the technical solutions of the present disclosure comply with relevant laws and regulations, and do not violate public order and moral.

According to embodiments of the present disclosure, the present disclosure further provides an electronic device, a readable storage medium and a computer program product.

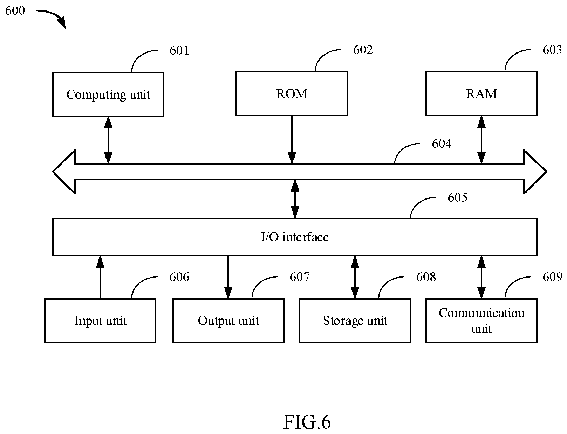

FIG. 6 is a schematic block diagram of an electronic device 600 configured to implement embodiments of the present disclosure. The electronic device is intended to represent various forms of digital computers, such as laptops, desktops, workbenches, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 6, the device 600 includes a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the device 600. The computing unit 601, the ROM 602 and the RAM 603 are connected to one another by a bus 604. An input/output (I/O) interface 605 is also connected to the bus 604.

A plurality of components in the device 600 are connected to the I/O interface 605, including an input unit 606, such as a keyboard and a mouse; an output unit 607, such as various displays and speakers; a storage unit 608, such as disks and discs; and a communication unit 609, such as a network card, a modem and a wireless communication transceiver. The communication unit 609 allows the device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 601 performs the methods and processing described above, such as the method according to the present disclosure. For example, in some embodiments, the method according to the present disclosure may be implemented as a computer software program that is tangibly embodied in a machine-readable medium, such as the storage unit 608. In some embodiments, part or all of a computer program may be loaded and/or installed on the device 600 via the ROM 602 and/or the communication unit 609. One or more steps of the method according to the present disclosure described above may be performed when the computer program is loaded into the RAM 603 and executed by the computing unit 601. Alternatively, in other embodiments, the computing unit 601 may be configured to perform the method according to the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor, which can be special or general purpose, configured to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, an RAM, an ROM, an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, a distributed system server, or a server combined with blockchain.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the protection scope of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the protection scope of the present disclosure.

**Claims**

1. An intersection vertex height value acquisition method, comprising:

   determining (101) roads with starting points or ending points located in a to-be-processed intersection; and
   performing (102), for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road.

2. The method according to claim 1, wherein the step of determining a road corresponding to the vertex comprises:

   determining, for any road, a core region corresponding to the road, the core region being located in the intersection region; and
   for any vertex, if it is determined that the vertex is located in any core region, taking the road corresponding to the core region as the matching road of the vertex, and otherwise, taking a road corresponding to a road center line of a perpendicular foot corresponding to the vertex as the matching road of the vertex.

3. The method according to claim 2, wherein the step of determining a core region corresponding to the road comprises:
   determining the core region corresponding to the road according to a width at a junction of the road and the intersection region.

4. The method according to claim 1, wherein the step of determining a height value of the vertex according to height values of endpoints on a road center line of the matching road comprises:
   if one matching road is provided, selecting two endpoints corresponding to the vertex from the endpoints on the road center line of the matching road, and determining the height value of the vertex according to a distance between the two selected endpoints and height values of the two selected endpoints.

5. The method according to claim 1, wherein the step of determining a height value of the vertex according to height values of endpoints on a road center line of the matching road comprises:

if N matching roads are provided, N being a positive integer greater than one, performing, for each matching road, the following processing: selecting two endpoints corresponding to the vertex from the endpoints on the road center line of the matching road, and determining the height value of the vertex according to a distance between the two selected endpoints and height values of the two selected endpoints; and acquiring a vertical distance from the vertex to the road center line of the matching road; and
determining a final height value of the vertex according to the acquired N height values and N vertical distances of the vertex.

6. The method according to claim 4 or 5, wherein the step of selecting two endpoints corresponding to the vertex from the endpoints on the road center line of the matching road comprises:

acquiring a perpendicular foot of the vertex on the road center line of the matching road; and
taking endpoints on two sides of the perpendicular foot as two endpoints corresponding to the vertex.

7. The method according to claim 4 or 5, wherein the step of determining the height value of the vertex according to a distance between the two selected endpoints and height values of the two selected endpoints comprises:
performing inverse distance interpolation calculation according to the distance between the two selected endpoints and the height values of the two selected endpoints, and taking a calculation result as the height value of the vertex.

8. The method according to claim 5, wherein the step of determining a final height value of the vertex according to the acquired N height values and N vertical distances of the vertex comprises:
performing inverse distance interpolation calculation according to the N height values and the N vertical distances, and taking a calculation result as the final height value of the vertex.

9. An intersection vertex height value acquisition apparatus (500), comprising: a first processing module (501) and a second processing module (502);

the first processing module (501) being configured to determine roads with starting points or ending points located in a to-be-processed intersection; and
the second processing module (502) being configured to perform, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road.

10. The apparatus (500) according to claim 9, wherein
the second processing module (502) determines, for any road, a core region corresponding to the road, the core region being located in the intersection region; and for any vertex, if it is determined that the vertex is located in any core region, takes the road corresponding to the core region as the matching road of the vertex, and otherwise, takes a road corresponding to a road center line of a perpendicular foot corresponding to the vertex as the matching road of the vertex.

11. The apparatus (500) according to claim 10, wherein
the second processing module (502) determines the core region corresponding to the road according to a width at a junction of the road and the intersection region.

12. The apparatus (500) according to claim 9, wherein
the second processing module (502), when one matching road is provided, selects two endpoints corresponding to the vertex from the endpoints on the road center line of the matching road, and determines the height value of the vertex according to a distance between the two selected endpoints and height values of the two selected endpoints.

13. An electronic device, comprising:

at least one processor; and

a memory in communication connection with the at least one processor; wherein
the memory stores instructions executable by the at least one processor, and the instructions are executed by the at least one processor to enable the at least one processor to perform the method according to any one of claims 1-8.

14. A non-transitory computer-readable storage medium storing computer instructions which, when executed by a computer, cause the computer to perform the method according to any one of claims 1-8.

15. A computer program product, comprising computer programs/instructions, wherein, when the computer programs/instructions are executed by a processor, the method according to any one of claims 1-8 is performed.

Determine roads with starting points or ending points located in a to-be-processed intersection — 101

Perform, for any vertex in a polygonal intersection region corresponding to the intersection, the following processing: determining a road corresponding to the vertex, taking the determined road as a matching road of the vertex, and determining a height value of the vertex according to height values of endpoints on a road center line of the matching road — 102

FIG.1

FIG.2

FIG.3

FIG.4

First processing module — 501

Second processing module — 502

Intersection vertex height
value acquisition apparatus

500

FIG.5

600

601

Computing unit

602

ROM

603

RAM

604

605

I/O interface

606

Input unit

607

Output unit

608

Storage unit

609

Communication unit

FIG.6

Europäisches
Patentamt

European
Patent Office

Office européen
des brevets

# EUROPEAN SEARCH REPORT

Application Number

EP 22 17 2486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 086156 A (ZENRIN CO LTD) 5 April 2007 (2007-04-05) * paragraphs [0018], [0079], [0082], [0149] – [0189], [0202]; figures 20, 21, 22, 24, 31, 32 * ----- | 1-15 | INV. G01C21/00 G06T17/05 G09B29/10 |
| A | JP H09 304106 A (MITSUBISHI ELECTRIC CORP) 28 November 1997 (1997-11-28) * paragraphs [0024], [0027] * ----- | 3,11 | |

TECHNICAL FIELDS
SEARCHED     (IPC)

G01C
G06T
G09B
G09D
G06F

The present search report has been drawn up for all claims

| Place of search | Date of completion of the search | Examiner |
|---|---|---|
| The Hague | 28 October 2022 | de la Rosa Rivera, E |

EPO FORM 1503 03.82 (P04C01)

## ANNEX TO THE EUROPEAN SEARCH REPORT
## ON EUROPEAN PATENT APPLICATION NO.

EP 22 17 2486

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2022

| Patent document cited in search report | | Publication date | Patent family member(s) | | Publication date |
|---|---|---|---|---|---|
| JP 2007086156 | A | 05-04-2007 | JP | 4742285 B2 | 10-08-2011 |
| | | | JP | 2007086156 A | 05-04-2007 |
| JP H09304106 | A | 28-11-1997 | JP | 3540093 B2 | 07-07-2004 |
| | | | JP | H09304106 A | 28-11-1997 |

EPO FORM P0459

For more details about this annex : see Official Journal of the European Patent Office, No. 12/82